Europäisches Patentamt

**European Patent Office**

**Office européen des brevets**

(11) Numéro de publication: **0 009 421**
**B1**

(12) **FASCICULE DE BREVET EUROPEEN**

(45) Date de publication du fascicule du brevet: **25.08.82**

(51) Int. Cl.³: **B 62 D 49/08, B 62 D 37/04**

(21) Numéro de dépôt: **79400363.2**

(22) Date de dépôt: **06.06.79**

(54) Dispositif anti-renversement pour tracteur à essieu avant oscillant.

(30) Priorité: **07.06.78 FR 7816990**

(43) Date de publication de la demande:
**02.04.80 Bulletin 80/7**

(45) Mention de la délivrance du brevet:
**25.08.82 Bulletin 82/34**

(84) Etats contractants désignés:
**DE IT NL**

(56) Documents cités:
**CH - A - 466 724**
**FR - A - 1 479 583**
**US - A - 2 767 995**

(73) Titulaire: **Pages, Paul**
**10, rue du 4 septembre**
**F-66670 Bages (FR)**

(72) Inventeur: **Pages, Paul**
**10, rue du 4 septembre**
**F-66670 Bages (FR)**

Courier Press, Leamington Spa, England.

Dispositif anti-renversement pour tracteur à essieu avant oscillant

La présente invention concerne les tracteurs agricoles ou industriels et élimine les dangers de verse.

A ma connaissance il n'existe pas d'appareil de ce genre à ce jour. Toutefois je mentionne le document CH—A—466724.

Le dispositif suivant l'invention empêche le tracteur de se renverser; ce dernier ne peut au plus que s'appuyer au sol sur l'une des barres stabilisatrices et retrouve facilement sa stabilité initiale.

Les avantages obtenus grâce à cette invention consistent essentiellement en ceci. Le déclenchement est automatique en cas de renversement, il est provoqué par le mouvement d'oscillation vertical de l'essieu avant du tracteur par rapport au butoir du tracteur. La sortie des barres stabilisatrices est ultra rapide et ne nécessite aucune intervention du conducteur. Les sabots en bout de barre stabilisatrice de par leur forme incurvée vers le haut redressent le tracteur. Au total cette invention a pour but de sauver des vies humaines et d'éviter des dégats matériels sur les tracteurs.

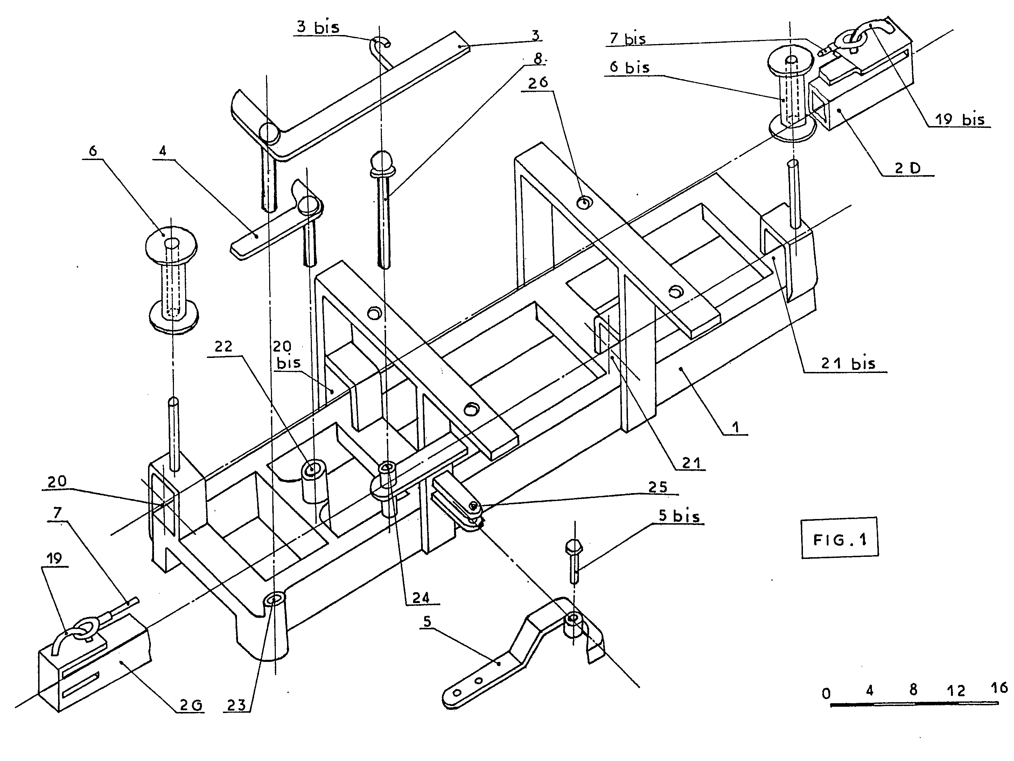

La figure 1 représente une perspective cavalière du bati du tracteur avec tous ses accessoires.

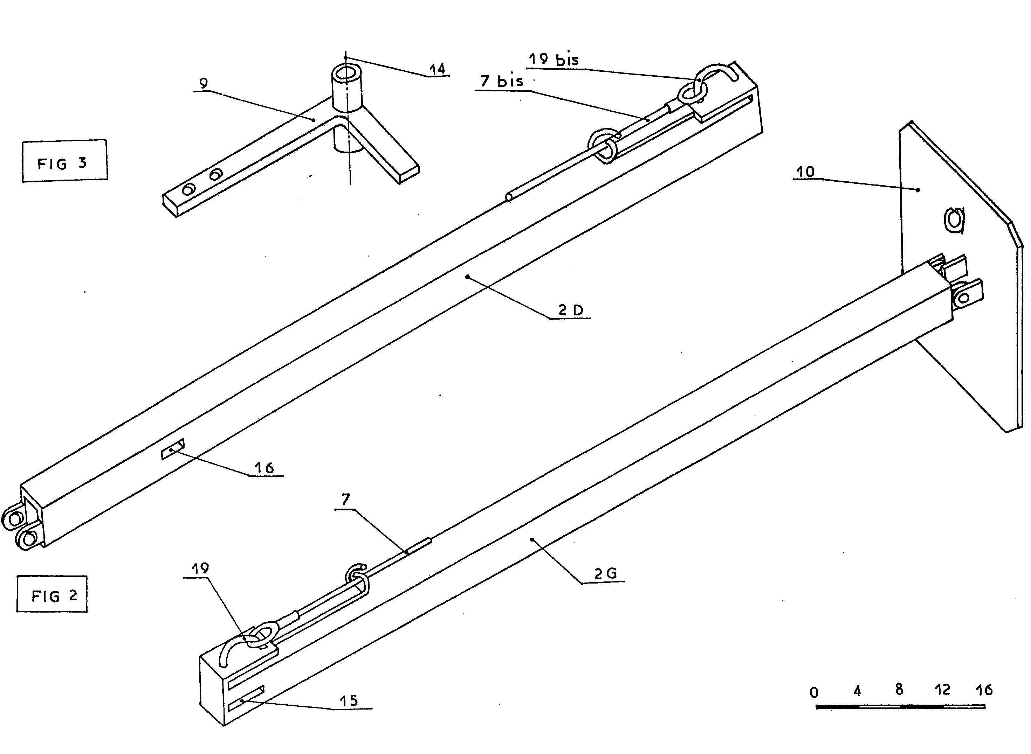

La figure 2 représente les barres stabilisatrices gauche et droite dont une avec son sabot.

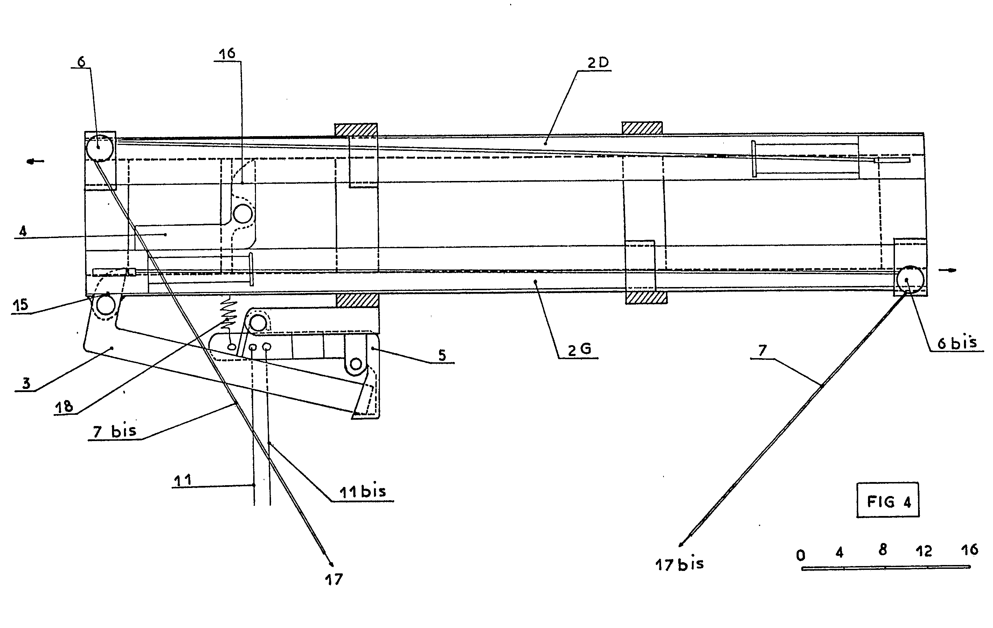

La figure 3 représente une biellette de verrou principal.

La figure 4 représente le bâti de l'appareil vu de dessus au complet.

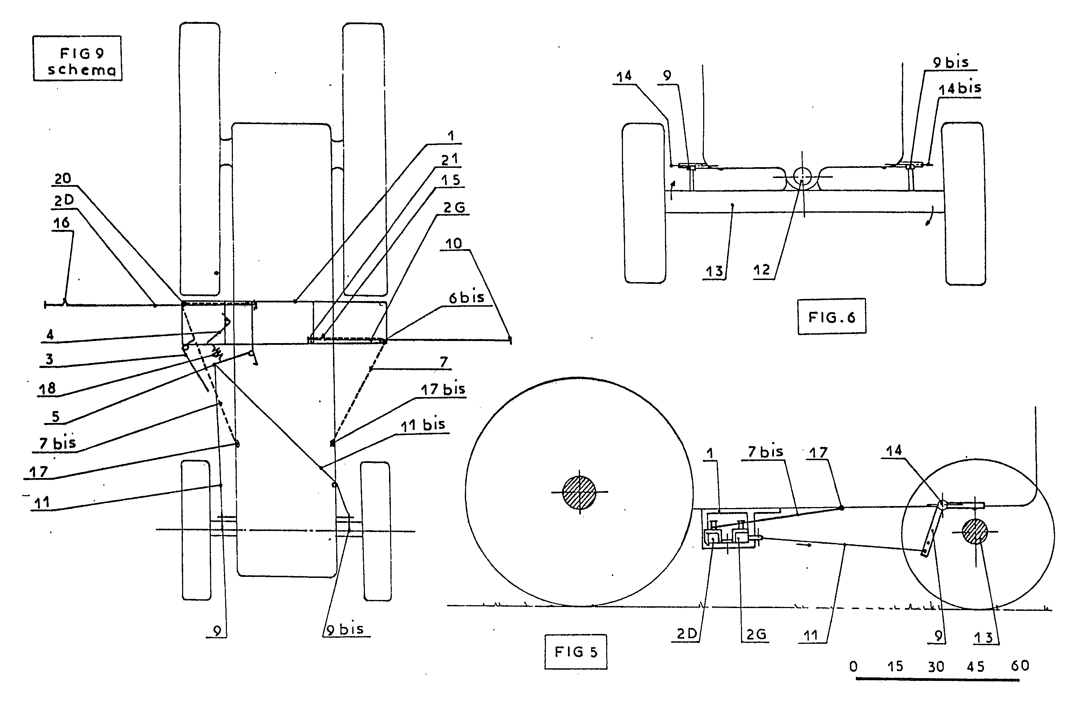

La figure 5 représente le mécanisme complet fixé sur le tracteur vu de profil.

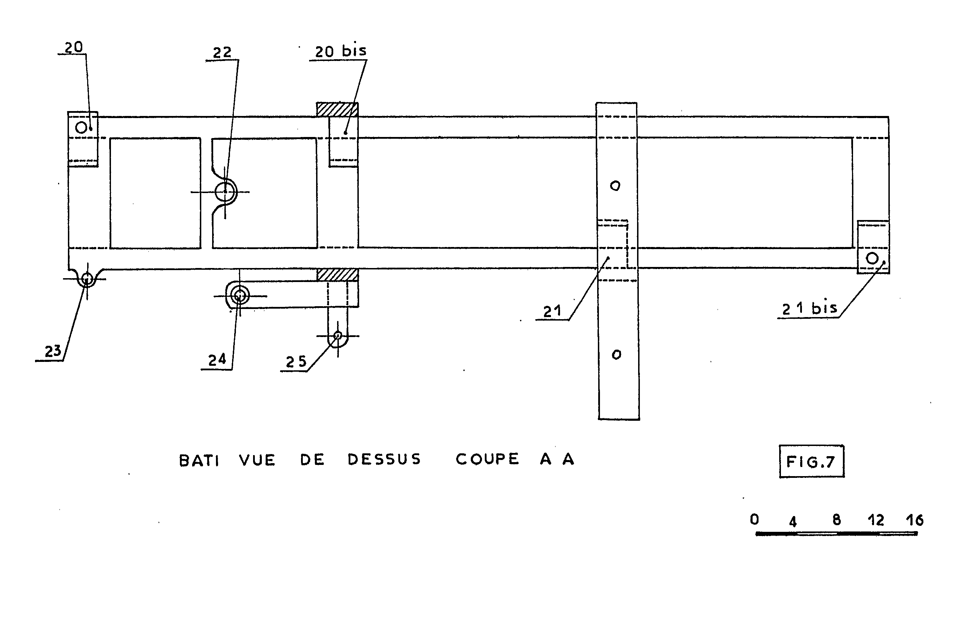

La figure 6 représente le train avant et ses biellettes vues de face.

La figure 7 représente le bati nu vu de dessus.

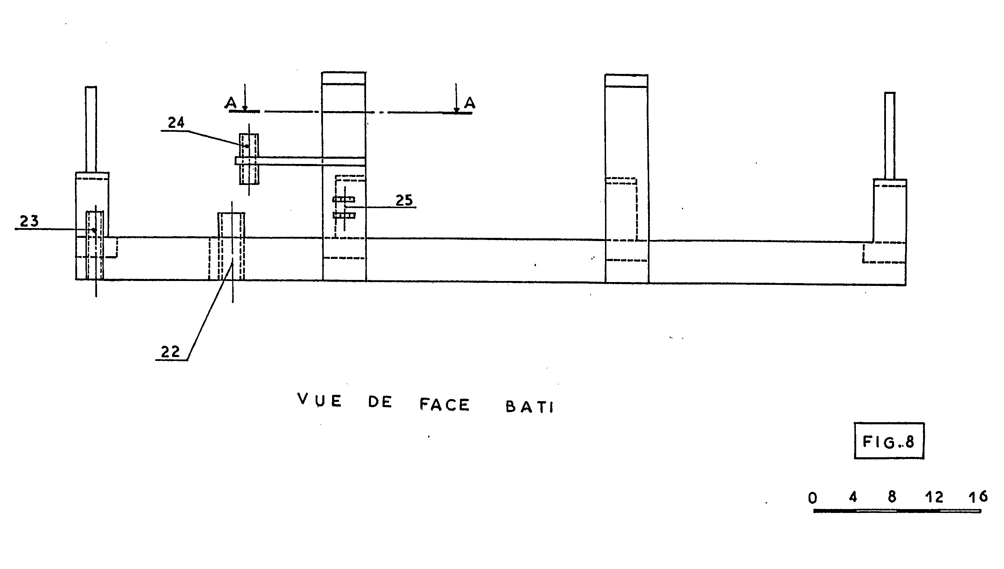

La figure 8 représente le bati nu vu de face.

La figure 9 représente le tracteur muni de l'appareil vu de dessus.

Le dispositif objet de l'invention comporte un bati fixé sur le corps du tracteur légèrement en avant des roues arrières. Ce bati comprend deux barres stabilisatrices droite et gauche 2 G et 2 D (F 1—2—4 et 5) coulissantes, maintenues bloquées par deux verrous 3 et 4 (F 1 et 4) dont l'un 3 (F 4) est maintenu fermé par le loquet 5 (F 1 et 4). Trois sandows fixés sur chaque barre en 19 et 19 bis (F 1) et sur un crochet 17 et 17 bis (F 5 et 9) soudé de chaque côté du chassis du tracteur exercent une traction continue sur chaque barre tendant à les amener vers l'extérieur en position d'ouverture extrême et d'appui. Un moyen incorporé au tracteur est destiné à tirer par deux câbles sur le loquet 5 (F 4) qui s'ouvre et libère le verrou 3 (F 4) qui déclenche en cascade le mécanisme d'ouverture. Ce moyen est deux biellettes droite 9 et gauche 9 bis (F 3—5 et 6) fixées sur leur axe 14 (F 3—5 et 6) soudé au tracteur et reliées chacune par le moyen d'un câble au loquet de déclenchement 5 (F 1—4). Quand un tracteur sur lequel le dispositif est adapté amorce une tentative de renversement (du côté droit par exemple), il oscille vers la droite et va s'appuyer avec son butoir sur l'essieu oscillant avant 13 (F 5 et 6). Au passage l'essieu avant 13 (F 5 et 6) pousse la biellette 9 (F 3—5 et 6) qui, par le moyen du câble II (F 4 et 5) tire sur le loquet 5 (F 1 et 4) qui libère le verrou principal 3 (F 1 et 4) par la traction des sandows 7 (F 4); le verrou 3 (F 1 et 4) étant libre, la barre stabilisatrice 2 G (F 4) est renvoyée à l'extérieur gauche en position d'appui possible. Au passage la barre stabilisatrice 2 G a libéré le verrou 4 (F 1 et 4) de la barre 2 D (F 1—2—4 et 5). Le verrou 4 (F 1 et 4) étant libéré la barre 2 D (F 1—2—4 et 5) est renvoyée à l'extérieur droit par la traction des trois sandows 7 bis (F 1—2—4 et 5), la barre droite est à son tour en position d'appui possible. Si le tracteur continue son mouvement de renversement vers la droite il trouve alors, par le moyen du sabot 10 (F 2) de cette barre, appui sur le sol et ne peut se renverser.

Il suffit alors de remettre le tracteur en équilibre stable et de réarmer le dispositif (5 Minutes) en vue du prochain incident.

Le dispositif objet de l'invention peut être utilisé sur tous les tracteurs agricoles et engins dont l'utilisation présente un danger de verse. Ces applications intéressent particulièrement la sécurité et tendent à éviter des accidents mortels par renversement du tracteur sur le conducteur.

## NOMENCLATURE DES PIECES

| | |
|---|---|
| 1—F 1 | Bati fixé sur tracteur |
| 2G F 1—2—4—5 | Barre stabilisatrice gauche |
| 2D F 1—2—4—5 | Barre stabilisatrice droite |
| 3 F 1 et 4 | Verrou d'ancrage principal sur 2G |
| 3 bis F 1 | Crochet verrouillage de sécurité |
| 4 F 1 et 4 | Verrou d'engrage secondaire sur 2D |
| 5 F 1 et 4 | Loquet de libération du verrou principal 3 |
| 5 bis F 1 | Axe de loquet 5 |
| 6 et 6 bis F 1 et 4 | Bobine de guidage des ''Sandow'' |
| 7 et 7 bis F 1—2—4—5 | Trois ''Sandow'' tirant sur chaque barre 2G et 2D |
| 8 F 1 | Goupille blocage verrouillage de sécurité (garage) |
| 9 et 9 bis F3—5—6 | Biellettes de commande du verrou principal |
| 10 F2 | Sabot oscillant d'appui des barres 2G et 2D |
| 11 et 11 bis F4—5 | Cables de tirage des biellettes 9 et 9 bis sur loquet 5 |
| 12 F 6 | Axe d'essieu oscillant du tracteur |
| 13 F5 et 6 | Essieu oscillant du tracteur |
| 14 et 14 bis F3—5—6 | Axe (soudé sur chassis tracteur) des biellettes 9—9 bis |
| 15 F 2—4 | Oeil d'ancrage barre 2G par verrou 3 |
| 16 F 2—4 | Oeil d'ancrage barre 2D par verrou 4 |
| 17 et 17 bis F 4—5 | Crochets (soudés au tracteur) de fixation ''Sandow'' 7—7 bis |
| 18 F 4 | Ressort rappel loquet 5 du verrou principal 3 |
| 19 et 19 bis F 2—1 | Anneau de fixation des ''Sandow'' 7—7 bis |
| 20 et 20 bis 21 et 21 bis F 1 et 7 | Tunnels de guidage et d'appui barre 2D et 2G |
| 22 F 1—7 et 8 | Logement (axe verrou 4) sur barre 2D |
| 23 F 1—7—8 | Logement (axe verrou 3) sur barre 2G |
| 24 F 1—7—8 | Logement coupille 8 sécurité garage |
| 25 F 1—7—8 | Logement axe 5 bis du loquet 5 |
| 26 F 1 | Trous de fixation (par bonlón) bati de l'appareil sur tracteur |

## Revendications

1. Dispositif automatique permettant aux tracteurs agricoles et engins de toute sorte, de travailler sur des terrains inégaux sans risque de se renverser et sans danger pour le conducteur, du type comportant incorporé au tracteur des barres stabilisatrices (2 D, 2 G), coulissant vers l'extérieur à droite et à gauche du tracteur en prévision d'un appui sur le sol caractérisé par la présence d'un moyen destiné à commander le déclenchement du mécanisme de dégagement de barres, mécanisme actionné par le mouvement d'oscillation vertical de l'essieu avant du tracteur par rapport au butoir du tracteur.

2. Dispositif selon la revendication 1 caractérisé en ce que ledit moyen destiné à commander le déclenchement du mécanisme est constitué par deux biellettes droite et gauche (9 et 9 bis) (figure 9), fixées par un axe (14 et 14 bis) (figure 6) au chassis du tracteur et actionnées par l'essieu oscillant (13) (figures 5 et 6) du tracteur.

3. Dispositif selon la revendication 2 caractérisé par le fait que les biellettes (9 et 9 bis) (figure 9) sont reliées au moyen d'un câble (11 et 11 bis) (figure 9) à un loquet (5) (figures 1, 4 et 9) de libération d'un verrou principal (3) (figures 1, 4 et 9) qui libère la barre stabilisatrice gauche (2 G) (figures 1, 4, 5 et 9).

4. Dispositif selon la revendication 3 caractérisé par le fait qu'il comporte un verrou secondaire (4) (figures 1, 4 et 9) libérant la barre stabilisatrice droite, (2 D) (figures 1, 4, 5 et 9) et qu'il est libéré lui-même par la barre stabilisatrice gauche (2 G) (figures 2 et 9).

5. Dispositif selon les revendications 3 et 4 caractérisé par le fait qu'il comporte 3 "Sandows" (7) fixés à la barre stabilisatrice gauche (2 G) reposant sur la bobine (6 bis) et fixés sur un crochet (17 bis) soudé sur le côté avant gauche du chassis du tracteur, ces "Sandows" exerçant une traction continue sur cette barre tendant à l'amener sur l'extérieur en position d'ouverture extrême d'appui.

6. Dispositif selon la revendication 4 caractérisé par le fait qu'il comporte 3 "Sandows" fixés à la barre stabilisatrice droite (2 D) contournant la bobine (6) et fixés sur un crochet (17) soudé sur le côté droit du chassis du tracteur, ces "Sandows" exerçant une traction continue sur cette barre tendant à l'amener sur l'extérieur en position d'ouverture extrême et d'appui.

7. Dispositif selon les revendications 5 et 6 caractérisé par le fait que les barres stabilisatrices et d'appui (2 G) et (2 D) glissent dans les tunnels (21) et (21 bis) et (20) et (20 bis) tirés par les "sandow" (7) et (7 bis) (figure 1).

8. Dispositif selon l'une quelconque des revendications précédentes caractérisé par le fait que les 2 barres stabilisatrices comportent chacune un sabot (10) (figure 2) permettant de prendre appui sur le sol.

## Claims

1. Automatic contrivance enabling agricultural tractors and machines of all kinds, to work on uneven grounds without risking to overturn and without danger for the driver of the type comprising, incorporated to the tractor, stability. bars (2 D, 2 G) sliding towards the exterior to the right and left of the tractor in prevision of a support on the ground, characterized by the presence of a device intended to operate the releasing of the mechanism of freeing bars, mechanism operated by the vertical oscillation of the front axle of the tractor in relation to the buffer of the tractor.

2. Device according to claim 1, characterized in that the said contrivance meant to command the releasing of the mechanism is constituted by two small rods right and left (9 and 9 bis) (Drawing 9) held by a spindle (14 and 14 bis) (Drawing 6) to the frame of the tractor and operated by an oscillating axle (13) (Drawing 5 and 6) of the tractor.

3. Contrivance according to claim 2, characterized by the fact that the small rods (9 and 9 bis) (Drawing 9) are connected by means of a cable (11 and 11 bis) (Drawing 9) to a latch (5) (Drawings 1, 4 and 9) releasing a principal bolt (3) (Drawings 1, 4, and 9) which releases the left Stability bar (2 G) (Drawings 1, 4, 6, and 9).

4. Contrivance according to claim 3, characterized by the fact that it comprises a secondary bolt (4) (Drawings 1, 4 and 9) releasing the right stability bar (2 D) (Drawings 1, 4, 5, and 9) and that it is released itself by the left stability bar (2 G) (Drawings 2 and 9).

5. Contrivance according to claims (3 and 4) characterized by the fact that it comprises 3 "Sandows" (7) fixed to the left stability bar (2 G) resting on the reel (6 bis) and fixed on a hook (17 bis) soldered on the front left side of the frame of the tractor, these "sandows" exercise a continued traction on this bar tending to bring it to the exterior in extreme opening position of support.

6. Contrivance according to claim 4, characterized by the fact that it comprises 3 "sandows" fixed to the right stability bar (2 D) passing round the reel (6) and fixed by a hook (17) soldered on the right side of the frame of the tractor, these "sandows" exercise a continued traction on this bar tending to bring it to the exterior in extreme opening position of support.

7. Contrivance according to claims 5 and 6, characterized by the fact that the stability bars of support (2 G) and (2 D) slip in tubes (21 and 21 bis) and (20 and 20 bis) pulled by the "sandows" (7 and 7 bis) (Drawing 1).

8. Contrivance according to any one of the preceding claims characterized by the fact that the 2 stability bars comprise each one a shoe (10) (Drawing 2) allowing them to take support on the ground.

## Patentansprüche

1. Automatische Vorrichtung, die den landwirtschaftlichen Traktoren sowie aller Art anderer Maschinen die Möglichkeit geben auf unebener Geländen ohne Gefahr sich umzustürtzen und somit ohne Gefahr für den Fahrer, arbeiten zu können, durch eine Art eingebauter Stabilisierungsstangen (2 D, 2 G) die nach aussen nach links und rechts des Traktoren aus schieben um auf dem festen Boden Stütze zu nehmen, charakterisiert durch die Möglichkeit diese Vorrichtung automatisch auszulösen durch die horizontale Schwingungsbewegung der Vorderachse des Tracktoren im Verhältnis zu seinem Fahrgestell.

2. Vorrichtung, nach Beanspruchung 1, charakterisiert durch die Möglichkeit die Auslösung des Mekanissmuses durch 2 winkel rechts und links zu erreichen (9 und 9 bis) (Skizze 9) die auf dem Fahrgestell des Traktoren mittels einer achse befestigt sind (14 und 14 bis) (Skizze 6) die Schwingungsbewegung der Vorderache des Traktoren löst somit den Mekanismus aus.

3. Vorrichtung nach Beanspruchung 2, charakterisiert durch die Tatsache, dass die 2 winkel (9 und 9 bis) (Skizze 9) durch ein kabel an eine klinke verbunden sind für die Freigabe (11 und 11 bis) (Skizze 9) und eine Hauptverriegelug (3) (Skizze 1, 4, und 9) die die Stabilisierungsstange links freigibt (2 G) (Skizze 1, 4, 6 und 9).

4. Vorrichtung nach Beanspruchung 3, charaktisiert durch die Tatsache, dass er einen zweiten Riegel besitzt (4) Skizze 1, 4, und 9) derselbe befreit die rechte Stabilisierungsstange (2 D) (Skizze 1, 4, 5 und 9) und sie selbst wird durch die Stabilisierungsstange links befreit. (2 G) (Skizze 2 und 9).

5. Vorrichtung nach Beanspruchung 3 und 4, charakterisiert durch die Tatsache, dass 3 Gummispanner (7) verwand werden, die an der linken Stabilisierungsstange befestigt sind (2 G) die über eine Rolle geleitet (6 bis) dann an einen Haken befestigt (17 bis), der an das Fahrgestell des Traktoren an der linken Seite vorn angeschweisst ist. Diese Gummispanner üben einen ständigen Zug auf die Stange und halten sie so weit wie möglich in der äussersten Stellung und somit in der grössten Oeffnung der Stützen.

6. Vorrichtung nach Beanspruchung 4, charaktierisiert dadurch dass 3 Gummispanner, die an der rechten Stabilisierungsstange befestigt sind (2 D) die über die Rolle gehn (6) an einen Haken befestigt sind (17) der auf der rechten Seite des Fahrgestellt des Traktoren angeschweisst ist. Die Gummispanner üben einen ständigen Zug auf diese Stange aus und halten sie so weit wie möglich in der äussersten Stellung somit in der grössten Oeffnung der Stützen.

7. Vorrichtung nach Beanspruchung 5 und 6, charakterisiert durch die Tatsache dass die Stabilisierungsstange die mit den Hammschuhen ausgestattet sind (2 G und 2 D) in den aufgeschweissten Bügeln gleiten (21 und 21 bis) sowie (20 und 20 bis) durch die Gummispanner gezogen werden.

8. Vorrichtung nach irgendeiner der vorstehenden Beanspruchungen charakterisiert durch die Tatsache das die 2 Stabilisierungsstange jeweils eine Hammschuh besitzen (10) (Skizze 2 die das Aufstützen auf dem festen Boden ermöglichen.

3 bis

3

8.

26

7 bis

6 bis

19 bis

6

4

2 D

22

20 bis

21 bis

20

21

1

7

25

19

24

5 bis

20

23

5

FIG.1

0009 421

0   4   8   12   16

FIG 3

9

14

19 bis

7 bis

10

2 D

16

7

19

2 G

FIG 2

15

0 009 421

2

0    4    8    12    16

FIG 4

FIG 9
schema

20
2D
16

1
21
15
2G
10

6bis

4
3
18
5
7 bis
17
11

7

17 bis

11 bis

9

9 bis

14    9

9 bis
14bis

13    12

FIG.6

0 009 421

1    7 bis    17    14

2D    2G    11    9    13

FIG 5

0    15    30    45    60

BATI VUE DE DESSUS COUPE A A

FIG.7

0 4 8 12 16

VUE DE FACE BATI

FIG. 8

0    4    8    12    16